Europäisches Patentamt

European Patent Office

Office européen des brevets

(11) Publication number: **0 454 310 A2**

# EUROPEAN PATENT APPLICATION

(21) Application number: 91302969.0

(22) Date of filing: 04.04.91

(51) Int. Cl.⁵: **G03D 15/04**

(30) Priority: 24.04.90 JP 107787/90
25.10.90 JP 288188/90

(43) Date of publication of application:
30.10.91 Bulletin 91/44

(84) Designated Contracting States:
DE FR GB

(71) Applicant: SOMAR CORPORATION
11-2, Ginza 4-chome Chuo-ku
Tokyo 104(JP)

(72) Inventor: Shioiri, Shigeo
Fusa 1-12-21
Abiko-shi, Chiba-ken(JP)
Inventor: Takamizawa, Eiji
301, Residence-Suga, Haruecho 2-33-5
Edogawa-ku, Tokyo(JP)
Inventor: Kanda, Kunio
Kamihanawa 838
Noda-shi, Chiba-ken(JP)

(74) Representative: Allam, Peter Clerk et al
LLOYD WISE, TREGEAR & CO. Norman
House 105-109 Strand
London WC2R 0AE(GB)

(54) Tape splicing device.

(57) A splicer for joining recording tapes end to end
with two adhesive tapes from both surfaces of the
recording tapes, while severing the adhesive tapes
protruding from the side edges of the recording
tapes and forming perforations in the adhesive tapes
at positions coincide with the sprocket holes of the
recording tapes.

EP 0 454 310 A2

This invention relates generally to a splicer for editing recording tapes such as moving picture films and TAB tapes and, more specifically, to a splicer for bonding two recording tapes end to end with two adhesive tapes from both sides of the two abutted recording tapes.

Tape automated bonding (TAB) which is now increasingly used in IC packaging is a method wherein IC chips and leads are bonded to a TAB tape which is a long film carrier bearing a multiplicity of printed wiring pattern units. Before or after bonding of the IC chips, TAB tapes are subjected to inspection to detect wiring defects or the like defects. Then, edition or cutting is performed to omit defective pattern units from the TAB tape and to rearrange the remaining desired portions. A splicer is generally used for this purpose.

Japanese Published Unexamined patent application (Tokkyo Kokai) No. 62-86592 discloses a splicer including a base having a groove adapted to receive a recording tape with sprocket holes along both sides thereof. The groove is provided with pins engageable with the sprocket holes to fix the tape in position. A roll of an adhesive tape supported on the base is unwound and is positioned in a predetermined position where an abutted portion of two recording tapes to be bonded is disposed. A lid is hinged to the base and includes a pair of cutter blades for cutting the adhesive tape placed in the predetermined position and a punching device for forming perforations in the two abutted recording tapes at positions corresponding to the sprocket holes thereof. When the lid is closed, the adhesive tape in the predetermined position is bonded to the abutted portion of the two recording tapes while simultaneously severing and punching the adhesive tape.

In recent years, wide recording tapes having a width of 48 mm, 70 mm or 158 mm are increasingly used. Such wide recording tapes require splicing with adhesive tapes on both upper and lower sides thereof in order to provide tight bonding. With conventional splicers, it is necessary to reverse the recording tapes to be spliced in order to apply adhesive tapes on both sides thereof. Since the recording tape is long and has IC chips and leads on one of the both sides thereof, however, reversing the recording tape causes a lot of problems such as damage of the leads. In addition, the cut adhesive tapes on both sides of the bonded recording tapes do not normally have precisely the same length with each other, so that the adhesive layer of one of the two adhesive tapes is undesirably slightly exposed on the outer surface.

The present invention has been made to overcome the foregoing problems of the conventional splicer. In accordance with one aspect of the present invention there is provided a splicer for bonding recording tapes each having at least one side provided with a row of sprocket holes, comprising:

a base having first and second, axially extending grooves each shaped for receiving a length of the recording tape therein and provided with pins engageable with the sprocket holes to maintain two recording tapes to be bonded in an abutted state;

first means provided adjacent to said first groove for supporting a roll of a first adhesive tape such that the first adhesive tape may be unwound from the roll and positioned at a first location transversely to said first groove with the adhesive layer thereof being oriented downward;

first lid means hinged to said base and movable between a closed position and an open position, said first lid means being operable to press the first adhesive tape positioned in said first location downward against said first groove when positioned in said closed position so that the upper side of the two abutted recording tapes placed in said first groove with their abutting ends being positioned beneath the first adhesive tape positioned in said first location can be brought into pressure contact with the adhesive layer of said first adhesive tape for joining the two recording tapes therewith;

a first pair of cutter blades mounted on said first lid means and cooperable therewith to cut the first adhesive tape joining the two recording tapes at both side edges thereof such that the cut first adhesive tape has a first length greater than the width of the recording tapes;

second means provided adjacent to said second groove for supporting a roll of a second adhesive tape such that the second adhesive tape may be unwound from the roll and positioned at a second location transversely to said second groove with the adhesive layer thereof being oriented upward;

second lid means hinged to said base and movable between a closed position and an open position, said second lid means being operable to press the two abutted recording tapes positioned in said second groove downward against said second groove when positioned in said closed position so that the lower side of the two recording tapes joined with said first adhesive tape and placed with said abutting ends being positioned on said second adhesive tape positioned in said second location can be brought into pressure contact with the adhesive layer of said second adhesive tape and may be applied on both upper and lower sides thereof with the first and second adhesive tapes, respectively, at their abutting ends;

a second pair of cutter blades mounted on said second lid means and cooperable therewith to cut the second adhesive tape such that the cut second adhesive tape has a second length equal to or greater than the width of the recording tape but is smaller than said first length, so that the first adhesive tape provided on the upper side of the abutted recording tapes and cut to have the first length may be further cut to have said second length together with the second adhesive tape provided on the lower side of the abutted tapes; and

punching means mounted on said second lid means and cooperable therewith to form perforations in the first and second adhesive tapes provided on the upper and lower sides of the abutted recording tapes at positions coincident with the sprocket holes thereof.

In another aspect, the present invention provides a splicer for bonding recording tapes each having at least one side provided with a row of sprocket holes, comprising:

a base having a groove shaped for receiving a length of the recording tape therein and provided with pins engageable with the sprocket holes to maintain two recording tapes to be bonded in an abutted state;

first means provided adjacent to one side of said groove for supporting a roll of a first adhesive tape such that the first adhesive tape may be unwound from the roll and positioned at a predetermined location extending transversely to said groove with the adhesive layer of said first adhesive tape being oriented downward;

second means provided adjacent to the other side of said groove for supporting a roll of a second adhesive tape such that the second adhesive tape may be unwound from the roll and positioned at said predetermined location with the adhesive layer thereof being oriented upward;

lid means hinged to said base and movable between a closed position and an open position, said lid means being operable to press the two abutted recording tapes positioned in said groove downward against said groove when positioned in said closed position so that the two abutted recording tapes placed in said groove with the abutting ends thereof being positioned between the first and second adhesive tapes positioned in said predetermined location can be brought into pressure contact with the adhesive layers of said first and second adhesive tapes and may be applied on both upper and lower sides thereof with the first and second adhesive tapes, respectively, at their abutting ends;

a pair of cutter blades mounted on said lid means and cooperable therewith to cut the first and second adhesive tapes on both side edges of the recording tape; and

punching means mounted on said lid means and cooperable therewith to form perforations in the first and second adhesive tapes provided on the upper and lower sides of the abutted recording tapes at positions coincident with the sprocket holes thereof.

The present invention will now be described in detail below with reference to the accompanying drawings, in which:

Fig. 1 is a perspective view diagrammatically showing a splicer according to the present invention;

Fig. 2 is an enlarged, fragmentary plan view diagrammatically showing a holding arm in an operating state;

Fig. 3 is a perspective view diagrammatically showing another embodiment of splicer according to the present invention;

Fig. 4 is an exploded, fragmentary, perspective view diagrammatically showing a lid and its associated parts of Fig. 3; and

Fig. 5 is an elevational view diagrammatically showing a severing device for severing recording tapes.

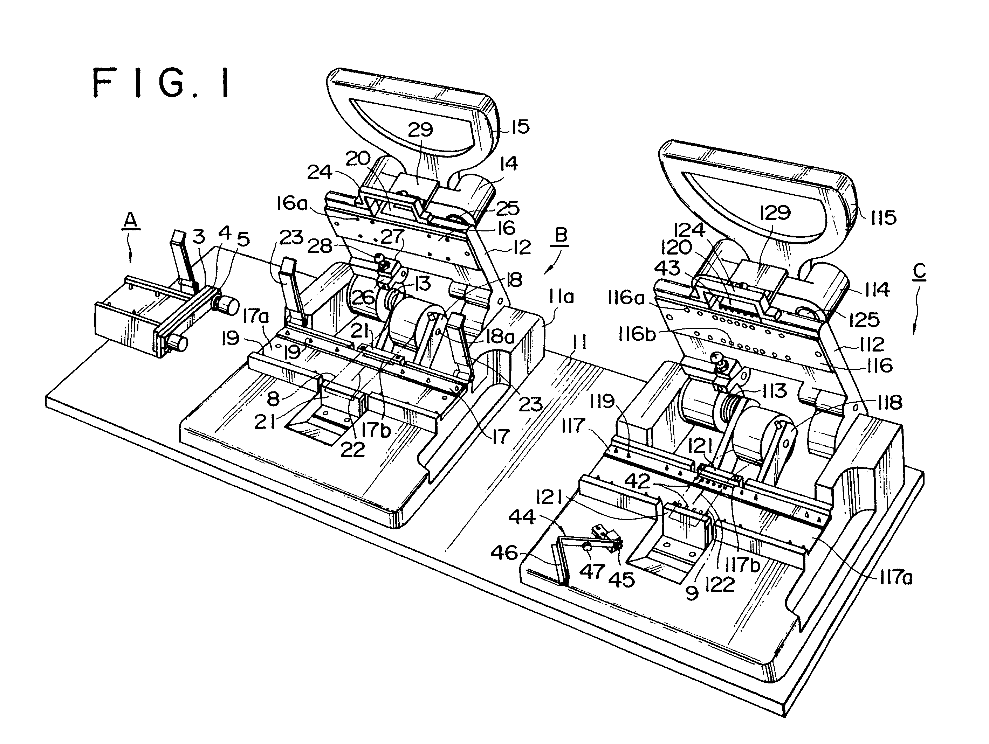

Referring now to Fig. 1, the reference numeral 11 denotes a base body having two, first and second axially extending grooves 17 and 117 each having a shape for receiving, generally horizontally, a length of a recording tape (not shown). The first and second grooves 17 and 117 are preferably coaxially disposed in series.

Each of the first and second grooves is preferably provided with a shallow, depressed portion 17a or 117a so that the recording tape to be processed can be received in the groove 17 or 117 in a flat state, even when it has protrusions, such as IC chips, on its surface. Planted on both sides of the grooves 17 and 117 are a plurality of pins 19 and 119, respectively, engageable with sprocket holes (not shown) of the recording tape to fix the recording tape in position. In opposite sides of the middle portion of each of the grooves 17 and 117, there are formed slit-like dies 17b and 117b engageable with cutter blades 20 and 120, respectively, which will be described hereinafter. Also formed in both sides of a center portion of the second groove 117 are die holes 42 arranged to coincide with the sprocket holes of the recording tape placed in the second groove 117.

The splicer shown in Fig. 1 is composed of first and second splicing mechanisms generally indicated as B and C disposed adjacent to the first and second grooves 17 and 117, respectively. In the first splicing mechanism, two recording tapes are bonded end to end with a first adhesive tape. The two recording tapes thus bonded is then applied with a second adhesive tape on the opposite side thereof.

Extending rearwardly and upwardly from a rear end portion of the base body 1 adjacent to the first groove 17 are a pair of arms 18 between which a shaft 18a is supported. A roll of a first adhesive tape 8 is rotatably supported about the shaft 18a. A pair of tape support plates 21 are provided on both side edges of the first groove 17. The first splicing mechanism B of the present invention is so constructed as to join two abutted tapes, placed in the first groove 17 with their abutting portion being positioned between the tape support plates 21 (e.g. in alignment with a reference line 22), with the adhesive tape 8 which has been manually unwound from the roll and positioned just above the abutted portion with the adhesive layer thereof being oriented downward. The first splicing mechanism B is operated to cut the adhesive tape 8 in a first length which is slightly longer than the width of the tapes to be joined, to press the cut adhesive tape 8 against the two abutted recording tapes to be joined for bonding them end to end.

The base body 1 has a pair of upwardly extending portions 11a between which a lid 12 is rotatably supported. The lid 12 is normally urged to rotate toward a direction apart from the base body 11 by the action of a coil spring 13, the rotation being limited by a stopper not shown. A flat, pressing plate 16 is fixed by screws to the underside surface of the lid 12. The plate 16 is provided with holes 16a engageable with pins 19 on the groove 17. To the lid 12 are rotatably supported a handle 15 at base end portion thereof. The other end of the handle 15 is designed to form a ring suited for being gripped by an operator. The lid 12 has a protrusion 27 having an inner threaded opening with which an adjusting screw 28 is threaded. The handle 15, too, has a protruded portion 26 engageable with the end of the adjusting screw 28 so that the rotational movement of the handle 15 in a direction apart from the lid 12 is limited by the screw 28. The maximum angular attitude of the handle 15 relative to the lid 12 may be controlled by rotation of the screw 28.

A cutter holder 14 having a pair of bores within which a pair of bars 25 planted on the lid 12 are slidably received respectively is disposed between the lid 12 and the handle 15. Each of the bars 25 is normally biased in the direction apart from the lid 12 by means of a spring (not shown), so that the handle 15 is normally urged to rotate in a direction apart from the lid 12 and, accordingly, the protruded portion 26 of the handle 15 is normally maintained in pressure contact with the screw 28 of the protrusion 27 of the lid 12.

The cutter holder 14 has a cutter support 29 to which a pair of spaced apart cutter blades 20 are detachably supported with pressing plates and screws. The cutter blades 20 are normally retracted from the underside surface of the plate 16 of the lid 12. Designated as 24 is a cover for protecting an operator from injury by the cutter blades 20 and as 23 are a pair of hinged fixing arms for fixing the recording tapes on the groove 17.

As a result of the above construction, when an operator draws the handle 15 toward the operator's side, the lid 12 receives a pressing force through the cutter holder 14 and is rotated against the action of the spring 13. Then the plate 16 of the lid is brought into contact with the groove 17 with the pins 19 being inserted into the holes 16a. Upon further downward movement of the handle 15, the handle 15 is rotated against the biasing force of the springs disposed within the holder 14, so that the cutter blades 20 are protruded from the the plate 16 and engaged with the cutter die 17b. By previously setting two recording tapes in the groove 17 with their ends being abutted to each other and the adhesive tape 8 on the support plates 21 with the adhesive layer being oriented downward, the two recording tapes may be joined with the tape 8 by the above operation with the simultaneous cutting of the adhesive tape 8 into the predetermined first length.

The second splicing mechanism has a construction similar to the first one described in the foregoing. Component parts of the second splicing mechanism which are corresponding to those in the first splicing mechanism are designated by similar reference numerals in "100" series and detailed explanation therefor will be unnecessary and is omitted here.

A roll of a second adhesive tape 9 is supported adjacent to the second groove 117. The second adhesive tape 9 may be unwound from the roll and may be positioned transverse to the groove 117 between a pair of support plates 121 with the adhesive layer thereof being oriented upward. The second splicing mechanism C of the present invention is so constructed as to apply the second adhesive tape onto the opposite side of the two abutted tapes where the first adhesive tape has been applied in the first splicing mechanism. More particularly, the second splicing mechanism C is operated to cut the adhesive tape 9 in a second length which is slightly longer than or the same as the width of the tapes to be joined but is shorter than the above-mentioned first length, to press the cut adhesive tape 9 against the two abutted recording tapes to be joined for bonding them and to form perforations in the adhesive tape 9 at positions corresponding to the sprocket holes of the recording tape.

A flat plate 116 is fixed to a second lid 112 and is provided with holes 116b arranged to coincide with the die holes 42 of the groove 117 as well as holes 116a engageable with pins 119 on the groove 117. Designated as 114 is a cutter holder 8 having a cutter support 129 to which a pair of spaced apart cutter blades 120 are secured. To the cutter support 129 are also secured a plurality of punches 43 adjacent to the cutter blades 120. The cutter blades 120 and the punches 43 are normally retracted from the underside surface of the plate 116 of the lid 112 but are able to protrude from the plate 116 when the lid 112 is closed. The punches 43 are protruded through the holes 116b of the press plate 116.

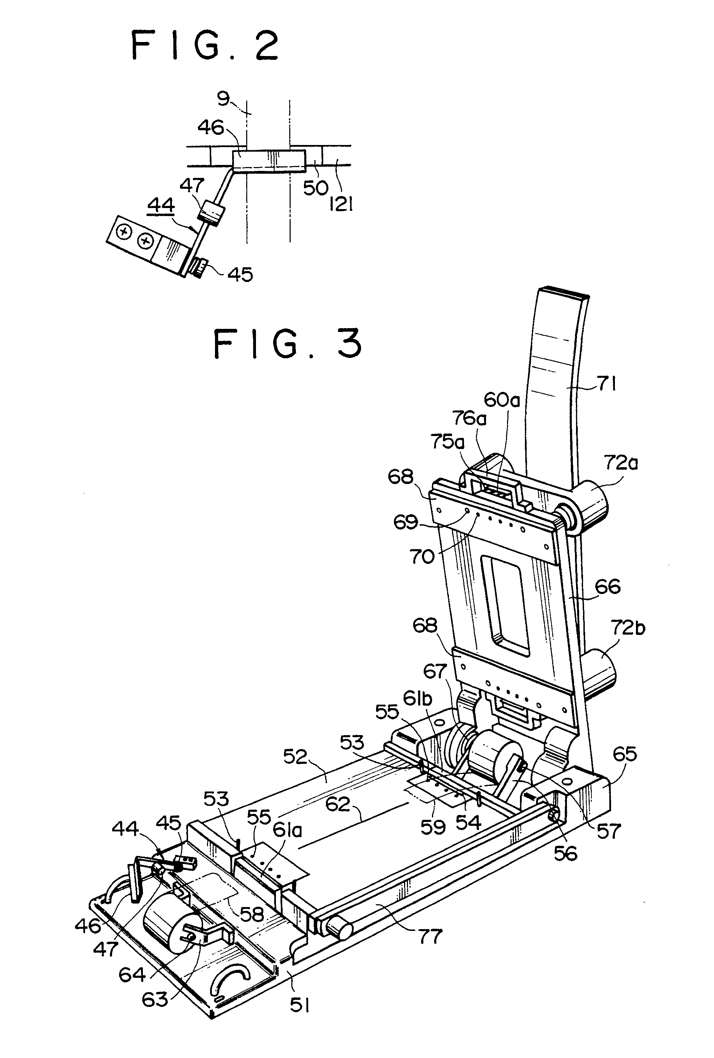

Designated generally as 44 is an L-shaped holding arm for holding the unwound second adhesive tape 9 in position suitable for bonding to the recording tape. The arm 44 is hinged to the base 11 by a shaft 45 and is rotatable between a home position as shown in Fig. 1 and a service position as shown in Fig. 2. The arm 44 has an end plate 46 engageable with a leading end of the second adhesive tape 9 placed on the support plate 121 when the arm is in the service position. Since the adhesive layer of the second adhesive tape 9 is oriented upward, the end plate 46 when contacted therewith can hold the tape 9 and can prevent the slackening thereof. Designated as 50 is a rubber sheet provided on the support plate 121 for reducing the slippage between the tape 9 and the support plate 121. Designated as 47 is a knob to be nipped by an operator in rotation of the holding arm 44.

In operation, the second adhesive tape 9 is unwound from the roll and the leading end is placed on the support plate 121. The holding arm 44 is rotated so that the end plate 46 is engaged with the top surface of the support plate with the tape 9 being sandwiched therebeween. Recording tapes which has been bonded on the upper surface thereof with the first adhesive tape is placed on recording tape 9 with the abutting portion being matched with the reference line 122. Then the lid 112 is closed. The cutter blades 120 are thus protruded from the the plate 116a and the punches are protruded from the holes 116b and engage with the die holes 42 so that the second tape 9 is cut and bonded to the recording tapes with the tape 9 with the simultaneous formation of punched perforations in the adhesive tape 9. In this case, since the first adhesive tape previously cut by the cutter blades 20 is longer than the second adhesive tape cut by the cutter blades 120, the first adhesive tape is again cut by the cutter blades 120 so that the adhesive tapes bonded on both upper and lower sides of the recording tapes have the same length with each other.

On one side of the base body 11 there is provided a cutter designated generally as A. Cutters with any known construction may be suitably used for the purpose of the present invention. The cutter A specifically shown in Fig. 1 includes a stationary blade 3 fixedly secured to the base body 11, an inner, movable blade 4 pivotally supported to the stationary blade 3, and an outer, movable blade 5 pivotally supported to the inner blade 4. The outer blade 5 is pivoted to the inner blade 4 at a position opposite to a location in which the inner blade 4 is pivoted to the stationary blade 3 and the inner blade 4 has a thickness equal to the half of the distance between adjacent two sprocket holes. The inner blade 4 is cooperable with the stationary blade 3 to cut a recording tape placed in a groove 1 with pins 7 being inserted into the sprocket holes thereof. When the inner blade 4 is rested and the tape can be cut by cooperation of the inner blade 4 with the outer blade 5. Thus, the cutter A can be used to sever two different types of recording tapes having different pattern arrangements relative to the sprocket holes. The resulting cut tape is then spliced with another similarly cut tape using the splicing mechanisms B and C in the manner described above.

Fig. 3 depicts another embodiment of splicer according to the present invention which can apply two adhesive tapes simultaneously on both upper and lower sides of two abutted recording tapes.

The reference numeral 51 denotes a base body having a groove 52 having a shape for receiving, generally horizontally, a length of a recording tape (not shown). Planted on both sides of the groove 52 are a plurality of pins 53 engageable with sprocket holes (not shown) of the recording tape to fix the recording tape in position. In opposite sides of the middle portion of the groove 52, there are formed slit-like dies 54 engageable with a pair of cutter blades 60a and 60b, respectively, which will be described hereinafter. Also formed in both sides of a center portion of the second groove 52 are die holes 55 arranged to coincide with the sprocket holes of the recording tape placed in the groove 52.

Extending rearwardly and upwardly from a rear end portion of the base body 51 adjacent to the groove 52 are a pair of arms 56 between which a shaft 57 is rotatably supported. A roll of a second adhesive tape 59 is secured to the shaft 57. A pair of tape support plates 61a and 61b are provided on both side edges of the groove 52. The second adhesive tape 59 may be unwound from the roll with the adhesive layer thereof being oriented upward and the leading end thereof can be placed on the supporting plate 61a.

Designated generally as 44 is an L-shaped holding arm for holding the unwound second adhesive tape 58 in position suitable for bonding to the recording tape. The arm 44 is hinged to the base 51 by a shaft 45 and has has an end plate 46 engageable with a leading end of the second adhesive tape 59 placed on the support plate 61a when the arm is in the service position. Since the adhesive layer of the second adhesive tape 59 is oriented upward, the end plate 46 when contacted therewith can hold the tape 59 in a predetermined position and can prevent the slackening thereof. Designated as 47 is a knob to be nipped by an operator in rotation of the holding arm 44. The structure and function of the holding arm 44 are the same as those described with reference to Figs. 1 and 2.

A pair of arms 63 are provided on the side of the groove 52 at a position opposite to the arms 57. A roll of a first adhesive tape 58 is secured about a shaft 64 rotatably received between the arms 63. The first tape may be unwound from the roll with the adhesive layer thereof being oriented downward and can be positioned in the same position as that of the second adhesive tape 59.

With the splicer of this embodiment, two abutted recording tapes to be bonded are disposed between the first and second adhesive tapes 58 and 59 with the abutting portion being located on a reference line 62 of the groove 52 and are bonded therewith while cutting and punching the adhesive tapes 58 and 59.

The base body 52 has a pair of rearwardly extending portions 65 between which a lid 66 is rotatably supported. The lid 66 is normally urged to rotate toward a direction apart from the base body 51 by the action of a coil spring 67, the rotation being limited by a stopper not shown. A pair of flat, pressing plates 68 are fixed to the underside surface of the lid 66. The plate 68 is provided with holes 69 engageable with pins 53 on the groove 52 and perforations 70 at positions coincident with the die holes 55. Designated as 71 is a handle or lever having a base end rotatably supported to the lid 66.

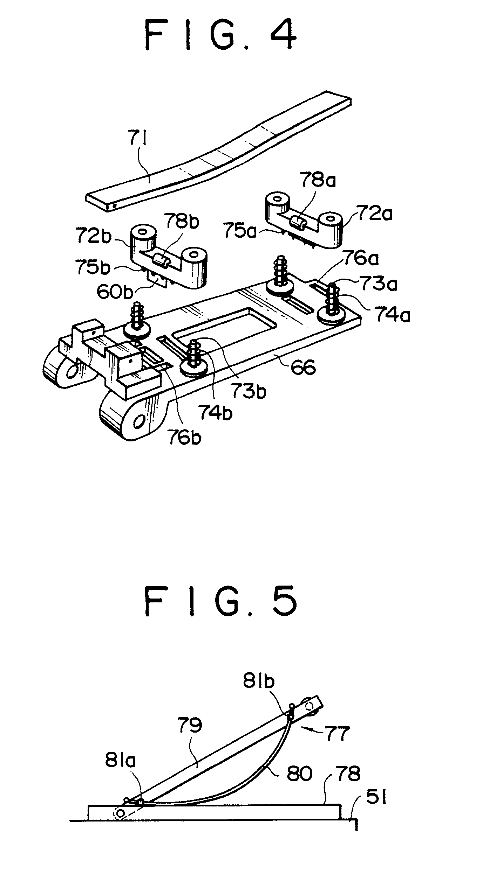

A pair of cutter holders 72a and 72b each having a pair of bores are disposed between the the handle 71 and the lid 66. As best seen from Fig. 4, the lid 66 has bars 73a and 73b with which the bores of the cutter holders 72a and 72b are engaged with coil springs 74a and 74b being fitted in respective bores so that the cutter holders 72a and 72b are vertically slidable relative to the lid 66 between upper and lower positions and are normally urged toward the upper positions.

To the cutter holders 72a and 72b are secured cutter blades 60a and 60b, respectively, and punches 75a and 75b, respectively at positions so that when the lid 66 is in the closed position the butter blades 60a and 60b can co-act with the cutter dies 54 of the groove 52 and the punches 75a and 75b can co-act with the die holes 55 of the groove 52. Designated as 76a and 76b are covers provided on both ends of the lid 66 for protecting an operator from injury by the cutter blades 60a and 60b. Designated as 78a and 78b are rollers which are brought into rolling contact with the handle 71 to facilitate smooth closure of the lid 66.

The splicer of the present invention is designed to be suitably used for editing recording tapes with a wide width. Thus, the distance between the pair of cutter blades 60a and 60b and the distance between the pair of rows of punches 75a and 75b are long. When, therefore, these cutter blades and punches are mounted on one cutter holder (as in the case of the embodiment of Fig. 1), there is a fear that the cutting and punching operations on both sides of the groove 52 are performed with a time lag. This is disadvantageous because the recording tapes to be spliced will be slightly displaced before completion of the later cutting and punching operations. In the embodiment shown in Figs. 3 and 4, since the two separate cutter holders 72a and 72b are used for the actuation of the paired cutters and punches locatable on both sides of the groove 52, the cutting and punching operations may be performed simultaneously on both sides.

Designated generally as 77 is a cutter for severing a recording tape placed in the groove 52. As shown in Fig. 5, the cutter 77 is composed of a stationary blade 78 fixedly secured to the base body 51 and a movable blade 79 hinged to the stationary blade 78. On the outer side wall of the movable blade 79 are rotatably provided a pair of rings 81a and 81b. An arched resilient member 80 such as a steel wire is slidably received in the rings 81a and 81b. The both ends of the resilient member 80 are provided with stoppers to prevent the disengagement of the resilient member 80 from the rings 81a and 81b. The resilient member 80 is brought into pressure contact with the recording tape to be severed so that the tape is fixed in position during the severing operation. The resilient member 80 also serves to function as a spring for normally urging the movable blade 79 upward.

In operation, an operator manually unwinds the second adhesive tape 59 and fixes the leading end thereof on the support plate 61a by means of the holding arm 44. Two recording tapes previously cut with the cutter 77 are placed end to end on the second adhesive tape 59 with their abutted portion being coincident with the reference line 62. The first adhesive tape 58 is subsequently unwound and placed on the two abutted tapes in position coincident with the first adhesive tape. The leading end of the first adhesive tape 58 is fixed to the second adhesive tape above the supporting plate 61b.

Then, the operator draws the handle 71 toward the operator's side. Thus, the lid 66 receives a pressing force through the bars 73a and 73b and is rotated against the action of the spring 67 so that the plates 68 of the lid 66 are brought into contact with the groove 62 with the pins 53 being inserted into the holes 69. Upon further downward movement of the handle 71 against the biasing force of the springs 74a and 74b, the cutter holders 72a and 72b are depressed towards their lower positions so that the cutter blades 60a and 60b are protruded from the the plates 68 and engaged with the cutter dies 54, thereby to cut the superposed first and second adhesive tapes 58 and 59. The punches 75a and 75b are also protruded through the perforations 70 of the plates 68 and engaged with the die holes 55 to form perforations in the first and second adhesive tapes at positions coinciding with the sprocket holes of the recording tapes.

## Claims

1. A splicer for bonding recording tapes each having at least one side provided with a row of sprocket holes, comprising:

a base having first and second, axially extending grooves each shaped for receiving a length of the recording tape therein and provided with pins engageable with the sprocket holes to maintain two recording tapes to be bonded in an abutted state;

first means provided adjacent to said first groove for supporting a roll of a first adhesive tape such that the first adhesive tape may be unwound from the roll and positioned at a first location transversely to said first groove with the adhesive layer thereof being oriented downward;

first lid means hinged to said base and movable between a closed position and an open position, said first lid means being operable to press the first adhesive tape positioned in said first location downward against said first groove when positioned in said closed position so that the upper side of the two abutted recording tapes placed in said first groove with their abutting ends being positioned beneath the first adhesive tape positioned in said first location can be brought into pressure contact with the adhesive layer of said first adhesive tape for joining the two recording tapes therewith;

a first pair of cutter blades mounted on said first lid means and cooperable therewith to cut the first adhesive tape joining the two recording tapes at both side edges thereof such that the cut first adhesive tape has a first length greater than the width of the recording tapes;

second means provided adjacent to said second groove for supporting a roll of a second adhesive tape such that the second adhesive tape may be unwound from the roll and positioned at a second location transversely to said second groove with the adhesive layer thereof being oriented upward;

second lid means hinged to said base and movable between a closed position and an open position, said second lid means being operable to press the two abutted recording tapes positioned in said second groove downward against said second groove when positioned in said closed position so that the lower side of the two recording tapes joined with said first adhesive tape and placed with said abutting ends being positioned on said second adhesive tape positioned in said second location can be brought into pressure contact with the adhesive layer of said second adhesive tape and may be applied on both upper and lower sides thereof with the first and second adhesive tapes, respectively, at their abutting ends;

a second pair of cutter blades mounted on said second lid means and cooperable therewith to cut the second adhesive tape such that the cut second adhesive tape has a second length equal to or greater than the width of the recording tape but is smaller than said first length, so that the first adhesive tape provided on the upper side of the abutted recording tapes and cut to have the first length may be further cut to have said second length together with the second adhesive tape provided on the lower side of the abutted tapes; and

punching means mounted on said second lid means and cooperable therewith to form perforations in the first and second adhesive tapes provided on the upper and lower sides of the abutted recording tapes at positions coincident with the sprocket holes thereof.

2. A splicer as claimed in claim 1, further comprising a holding arm hinged to said base and having an engaging end engageable with an upper surface of a leading end portion of said second adhesive tape positioned in said second location for preventing said second adhesive tape from slackening.

3. A splicer for bonding recording tapes each having at least one side provided with a row of sprocket holes, comprising:

a base having a groove shaped for receiving a length of the recording tape therein and provided with pins engageable with the sprocket holes to maintain two recording tapes to be bonded in an abutted state;

first means provided adjacent to one side of said groove for supporting a roll of a first adhesive tape such that the first adhesive tape may be unwound from the roll and positioned at a predetermined location extending transversely to said groove with the adhesive layer of said first adhesive tape being oriented downward;

second means provided adjacent to the other side of said groove for supporting a roll of a second adhesive tape such that the second adhesive tape may be unwound from the roll and positioned at said predetermined location with the adhesive layer thereof being oriented upward;

lid means hinged to said base and movable between a closed position and an open position, said lid means being operable to press the two abutted recording tapes positioned in said groove downward against said groove when positioned in said closed position so that the two abutted recording tapes placed in said groove with the abutting ends thereof being positioned between the first and second adhesive tapes positioned in said predetermined location can be brought into pressure contact with the adhesive layers of said first and second adhesive tapes and may be applied on both upper and lower sides thereof with the first and second adhesive tapes, respectively, at their abutting ends;

a pair of cutter blades mounted on said lid means and cooperable therewith to cut the first and second adhesive tapes on both side edges of the recording tape; and

punching means mounted on said lid means and cooperable therewith to form perforations in the first and second adhesive tapes provided on the upper and lower sides of the abutted recording tapes at positions coincident with the sprocket holes thereof.

4. A splicer as claimed in claim 3, further comprising

a pair of holders each supported on said lid means and vertically movable relative to said lid means between upper and lower positions,

spring means provided between said holders and said lid means for urging said holders toward said upper position,

said punching means and said cutter blades being secured to said holders such that said punching means and said cutter blades are positioned in extended states to perform punching and severing operations when said holders are in the lower position and are positioned in retracted states when said holders are in the upper position, and

a handle hinged to said lid means and engageable with said holders so that by rotating said handle said holders can be displaced from said upper position to said lower position.

5. A splicer as claimed in claim 3, further comprising a holding arm hinged to said base and having an engaging end engageable with an upper surface of a leading end portion of said second adhesive tape positioned in said predetermined location for preventing said second adhesive tape from slackening.

FIG. 1

# F I G . 2

# F I G . 3

# F I G. 4

# F I G. 5